# EUROPÄISCHE PATENTANMELDUNG

(11) **EP 3 599 087 A1**
(43) Veröffentlichungstag der Anmeldung: **29.01.2020**
(21) Anmeldenummer: 18185391.2
(22) Anmeldetag: 25.07.2018
(51) Int. Cl.: B30B 11/34

(54) **VORRICHTUNG ZUR BEREITSTELLUNG VON EINLEGERN AN EINE TABLETTIERMASCHINE, SOWIE EIN VERFAHREN ZUR HERSTELLUNG EINES PRESSLINGS, DER EINEN EINLEGER AUFWEIST**

(71) Anmelder: Korsch AG, 13509 Berlin (DE)
(72) Erfinder: Korsch, Wolfgang, 13465 Berlin (DE); Schmett, Michael, 14476 Potsdam (DE); Mies, Stephan, 13467 Berlin (DE)
(74) Vertreter: Hertin und Partner Rechts- und Patentanwälte PartG mbB

(57) **Zusammenfassung**

Die Erfindung betrifft eine Vorrichtung (10) zur Bereitstellung von Gegenständen zur Verwendung als Einleger (12) in einem Pressling an eine Tablettiermaschine (14), sowie ein Verfahren zur Herstellung eines Presslings, der einen Einleger (12) aufweist.

## Beschreibung

Die Erfindung betrifft eine Vorrichtung zur Bereitstellung von Gegenständen zur Verwendung als Einleger in einem Pressling an eine Tablettiermaschine, sowie ein Verfahren zur Herstellung eines Presslings, der einen Einleger aufweist.

### Hintergrund und Stand der Technik:

Mit Tablettiermaschinen werden in vielen Industriezweigen pulverförmige oder granulierte Materialien zu festen Presslingen verarbeitet. In der pharmazeutischen Industrie handelt es sich beispielsweise um vielfältige Formen von Tabletten, in der chemischen Industrie handelt es sich um Geschirrspül-Tabs, Toilettenreiniger-Tabletten, Düngemittel-Stäbchen oder Katalysatoren, in der Nahrungsmittel-Industrie zum Beispiel um Pfefferminz-Tabletten oder Traubenzucker-Tabletten. Vor allem die Unterklasse der Rundlaufpressen wurde entwickelt, um aus pulverförmigen oder granulierten Pressmassen in großer Stückzahl feste und stabile Presslinge innerhalb engster Gewichtstoleranzen herzustellen. Diese Pressmasse wird im Sinne der Erfindung bevorzugt auch als Tablettiermaterial bezeichnet. In der Regel wird das Tablettiermaterial über die Materialzufuhr einer Füllvorrichtung zugeführt. Die Füllvorrichtung ist oberhalb der Matrizenscheibe angeordnet, wobei in den Öffnungen oder Bohrungen der Matrizenscheibe die Presslinge erzeugt werden, indem Ober- und Unterstempel in den Öffnungen oder Bohrungen mit großem Druck auf das zwischen den Presswerkzeugen befindliche Pressmaterial gepresst werden. Die Presswerkezuge werden üblicherweise von Ober- und Unterstempeln gebildet.

Beispielsweise werden Rundlaufpressen im technisch-chemischen Bereich eingesetzt, um Bestandteile von Batterien, beispielsweise Knopfzellen, herzustellen. Im Stand der Technik sind Knopfzellen zumeist wie folgt aufgebaut. Die Knopfzelle besteht in der Regel aus einem Becher, in den eine Tablette aus Metalloxid-Pulver eingelegt und eingepresst wird. Der in einen Becher eingepresste Pressling aus Metalloxid-Pulver wird vorzugsweise als Kathode bezeichnet, da er innerhalb der erzeugten Batterie die Funktion einer Kathode einnehmen kann. Die Kathode kann dann insbesondere zu einer Knopfzelle weiterverarbeitet werden.

Beispielsweise werden Silberoxid-Knopfzellen als Kathoden hergestellt, die eine kompakte Form mit im Wesentlichen kreisförmiger Grundfläche und einem Durchmesser zwischen ca. 5 und 11 mm und einer Höhe von ca. 0,5 bis 3 mm aufweisen. Die so erzeugten Silberoxid-Tabletten sind sehr stabil und können beispielsweise mit einem Vibrator mechanisch entstaubt und als Schüttgut in Dosen oder anderen Containern aufbewahrt werden. Ferner können die Silberoxid-Tabletten ohne Schaden zu nehmen als Schüttgut transportiert werden.

Es hat sich aber gezeigt, dass die beispielsweise für Silberoxid-Tabletten bekannten, herkömmlichen Herstellungsverfahren nicht geeignet sind, um andere Metalloxid-Tabletten herzustellen, da die unterschiedlichen Materialien teilweise vollkommen unterschiedliche Material- oder Fließeigenschaften aufweisen. Es können gegebenenfalls zusätzliche Maßnahmen erforderlich sein, um überhaupt verarbeitungsfähige Presslinge zu erhalten. Es sind beispielsweise Materialien bekannt, die bei Zuführung zur Tablettiermaschine aus verschiedenen Gründen eine gewisse Restfeuchtigkeit aufweisen. Insbesondere wenn solche "feuchten" Materialien zu Presslingen mit großen Durchmessern und geringen Höhen verarbeitet werden sollen, kann es zu Problemen hinsichtlich der Stabilität und Festigkeit der Presslinge kommen. Es hat sich gezeigt, dass die Presslinge aus solchen Materialien sehr empfindlich sind und dass sie nicht ohne weiteres mit konventionellen Mitteln weiterverarbeitet werden können. Insbesondere treten bei solchen Presslingen häufig Beschädigungen, wie abgebrochene Kanten oder zerbrochene Tabletten, auf.

Um die Stabilität und die Festigkeit solcher "feuchten" Metalloxid-Tabletten zu erhöhen, ist beispielsweise vorgeschlagen worden, Stützgitter im Herstellungsprozess in die Presslinge einzuarbeiten. Dies kann beispielsweise manuell erfolgen, was offensichtlich sehr aufwändig und mit einem hohen Personal- und Finanzaufwand verbunden ist. Insbesondere ist auch der Herstellungsaufwand für solche Tabletten mit Stützgitter sehr hoch, da häufig mehrere Maschinen eingesetzt werden müssen, um die verschiedenen erforderlichen Arbeitsschritte nacheinander auszuführen. Das Vorhalten von verschiedenen Maschinen, die nur für die Erledigung sehr spezieller Aufgaben verwendet werden können, ist aber aus betriebswirtschaftlicher Sicht unerwünscht. Insbesondere sind im Stand der Technik keine Rundlaufpressen bekannt, mit denen Stützgitter in Presslinge eingepresst werden. Dies insbesondere deswegen, weil die Fachwelt bisher davon ausgegangen war, dass eine kontinuierlich arbeitende Rundlaufpresse nicht dafür geeignet ist, üblicherweise getaktete zugeführte Einleger mit einer gewünschten Produktionsleistung zu verarbeiten.

Selbst wenn es einzelne Maschinen gibt, mit denen Stützgitter-Presslinge hergestellt werden können, handelt es sich dabei häufig um teure und komplexe Sondermaschinen, mit denen Tablettiermaterial mit einer hohen Restfeuchtigkeit zu Presslingen mit einer verbesserten Stabilität und Festigkeit verpresst werden können. Solche Sondermaschinen sind häufig als Automaten ausgebildet. Allerdings ist der Erwerb einer solchen Sondermaschine mit einem hohen finanziellen Aufwand verbunden und die einmal erworbene Maschine muss gut ausgelastet werden, um ihre Anschaffung finanziell zu rechnen. Nachteiligerweise werden solche Sondermaschinen nur in kleinen Stückzahlen gefertigt, so dass die Wartung und die Reparatur häufig sehr zeit- und kostenintensiv sind, weil es nur wenige geschulte Techniker auf dem entsprechenden technischen Gebiet gibt. Ferner kann es zu langen Ausfallzeiten kommen, wenn es aufgrund der geringen Stückzahlen der Maschinen zu Engpässen mit der Lieferung von Ersatzteilen kommt.

Die bekannten, konventionellen Herstellungsverfahren sind durch eine Vielzahl einzelner Operationen gekennzeichnet, bei denen mehrere verschiedene Maschinen oder Maschinenteile konzertiert zusammenwirken müssen. Ein konventionelles Herstellungsverfahren kann beispielweise die folgenden Operationen umfassen:
1) Füllen der Matrize mit einem Metalloxid-Pulver mit einem Füllgerät
2) Nachfüllen von Tablettiermaterial mit einem Rührwerk
3) Anpressen des Tablettiermaterials
4) Optische Messung der Füllhöhe in der Matrize
5) Getaktetes Ausstanzen von runden Scheiben aus einem Drahtband durch eine Stanzstation, wobei die ausgestanzten Scheiben auf die Oberfläche des Tablettiermaterials innerhalb der Matrize fallen
6) Optische und/oder elektrische Prüfung, ob die runden Scheiben, die als Stützgitter dienen, in die Matrizenbohrung eingelegt sind
7) Pressvorgang
8) Ausstoßvorgang
9) Aussortieren von fehlerhaften Presslingen, wobei fehlerhafte Presslinge, die beispielsweise kein Stützgitter enthalten, beispielsweise an ihrem geringen Gewicht erkannt werden können
10) Entnahme der "guten" Presslinge aus den Herstellungsmaschinen, beispielsweise mit einer Ablaufrutsche, wobei die Herstellungsmaschinen üblicherweise getaktet arbeiten.

Aufgrund der Komplexität dieser Verfahren kommt es häufig zu Produktionsstillständen und -ausfällen und das gesamte Herstellungsverfahren ist sehr überwachungsintensiv. Ferner werden mit den bekannten, herkömmlichen Herstellungsverfahren nur sehr geringe Produktionsleistungen von beispielsweise 10 bis 20 Presslingen pro Minute erzielt, was im Vergleich zu Presslingen ohne Stützgitter ein sehr geringer Wert ist.

Es ist demnach Aufgabe der vorliegenden Erfindung, eine Vorrichtung und ein Verfahren zur Herstellung von Presslingen aus einem Metalloxid-Pulver mit höherer Restfeuchtigkeit bereitzustellen, die nicht die Nachteile und Mängel des Standes der Technik aufweisen. Insbesondere sollen die erzeugten Tabletten eine hohe mechanische Stabilität und Festigkeit aufweisen, aber es sollen trotzdem hohe Produktionsleistungen erreicht werden. Die Vorrichtungen zur Herstellung der Presslinge sollen einfach zu bedienen und wartungsarm sein. Ferner sollen sie für verschiedene Zwecke genutzt beziehungsweise umgerüstet werden können. Das bereitzustellende Herstellungsverfahren soll eine hohe Produktionsleistung ermöglichen und dabei unanfällig für Fehler sein. Darüber hinaus sollen mit dem bereitzustellenden Verfahren und der bereitzustellenden Vorrichtung relativ große Presslinge, beispielsweise mit einem Durchmesser von 10 bis 22 mm und einer Höhe von 0,5 bis 3 mm, unkompliziert und stabil erzeugt werden können.

### Beschreibung der Erfindung:

Gelöst wird die Aufgabe durch die Merkmale der unabhängigen Ansprüche. Vorteilhafte Ausgestaltungen der Erfindung sind in den abhängigen Ansprüchen beschrieben. Erfindungsgemäß ist eine Vorrichtung vorgesehen zur Bereitstellung von Gegenständen zur Verwendung als Einleger in einem Pressling an eine Tablettiermaschine. Die Vorrichtung ist dadurch gekennzeichnet, dass sie eine Stanzeinheit und eine Transporteinheit mit Carriern umfasst, wobei die Stanzeinheit dazu eingerichtet ist, die Einleger aus einem bandförmigen Material auszustanzen und auf die Carrier der Transporteinheit zu übergeben, wobei die ausgestanzten Einleger auf den Carriern zu einer Übergabeeinheit transportiert werden, wobei die Übergabeeinheit dazu eingerichtet ist, die ausgestanzten Einleger von den Carriern zu übernehmen und in Öffnungen einer Matrizenscheibe der Tablettiermaschine einzulegen, so dass die ausgestanzten Einleger durch die Tablettiermaschine mit einem Tablettiermaterial zu einem Pressling mit Einleger verarbeitbar sind. Die Verarbeitung der Einleger beziehungsweise die Erzeugung des Presslings erfolgt vorzugsweise mit Presswerkzeugen der Tablettiermaschine, die vorzugsweise von Ober- und Unterstempein gebildet werden.

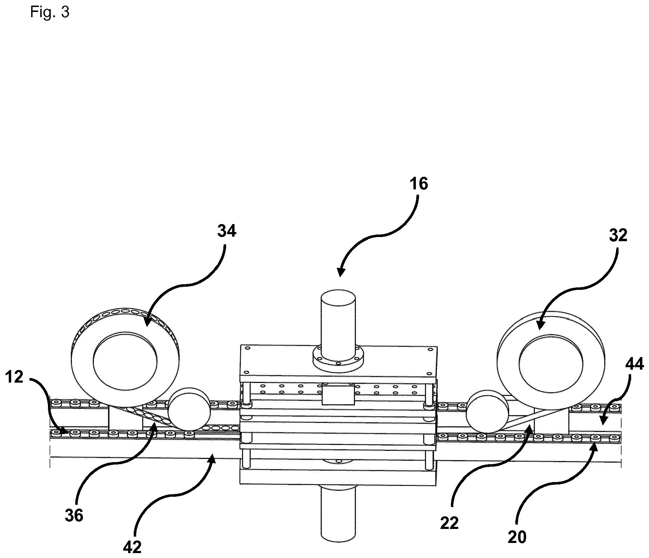

Es ist im Sinne der Erfindung insbesondere bevorzugt, dass die Transporteinheit Carrier umfasst, wobei die Carrier dazu eingerichtet sind, die ausgestanzten Einleger zu transportieren. Die Carrier werden vorzugsweise von metallischen Zylindern gebildet, die beispielsweise als Hohlzylindern oder als Vollzylinder mit einer zentralen Langbohrung ausgebildet sein können. Es kann im Sinne der Erfindung auch bevorzugt sein, dass die Carrier Kunststoff umfassen oder aus Kunststoff gebildet sind. Vorzugsweise werden die Hohlzylinder auch als zylindrische Körper bezeichnet. Die mittige Bohrung innerhalb der Hohlzylinders kann beispielsweise auch als Mittenbohrung ausgeführt sein. Es ist im Sinne der Erfindung bevorzugt, dass durch die Langbohrung oder durch den Hohlraum innerhalb des Hohlzylinders die Führung des Carriers mit einem Druckluftstoß oder mit einem Vakuum beaufschlagt werden kann. Mit anderen Worten ist es im Sinne der Erfindung bevorzugt, dass die Einleger, die nach dem Stanzen auf den Führungen der Carrier vorzugsweise zentriert zu liegen kommen, unter Verwendung eines Vakuums angesaugt und damit lösbar an dem Carrier, beziehungsweise seiner Führung, fixiert werden können, oder dass die Einleger, wenn sie im Bereich der Tablettiermaschine in die Öffnung der Matrizenscheibe eingelegt werden sollen, mit einem Druckluftstoß ausgeworfen werden können. Bei den Führungen kann es sich beispielsweise um Kerben, Öffnungen, Löcher oder Vertiefungen in einem oberen Bereich des Carriers beziehungsweise seiner Oberfläche handeln. Neben der Führung können die Carrier an ihrer Oberseite ferner einen äußeren Abschlussring aufweisen, der vorzugsweise dafür sorgt, dass die auf den Carriern befindlichen ausgestanzten Einleger nicht verrutschen oder unerwünschterweise von diesem getrennt werden. Beispielhafte Ausgestaltungen der Oberseiten der Carrier sind zum Beispiel in den Figuren 3, 4 und 5 dargestellt. Bevorzugt ist, wenn die Carrier aus Edelstahl bestehen, damit sie mit dem nötigen Gewicht stabil auf dem Transportband stehen. Die Carrier können auch Einsätze aus Kunststoff umfassen, wobei es sich vorzugsweise um FDA-zugelassenen Kunststoff handelt.

Es stellt ein besonderes Verdienst der Erfindung dar, dass ein System aus einer vorgeschlagenen Vorrichtung und einer konventionellen Tablettiermaschine bereitgestellt werden kann, bei dem kontinuierlich und getaktet arbeitende Elemente unkompliziert miteinander zusammenarbeiten. Damit überwindet die Erfindung das in der Fachwelt bestehende Vorurteil, dass dies nicht oder nur mit großen technischen Schwierigkeiten möglich ist. Die Erfindung stellt somit insbesondere eine Abkehr von Stand der Technik dar, wobei das unkomplizierte Zusammenwirken von getakteter Einleger-Zuführung und kontinuierlicher Presslings-Herstellung durch die Tablettiermaschine insbesondere durch das synergistische Zusammenwirken der Bestandteile der vorgeschlagenen Vorrichtung ermöglicht wird. Beispielsweise stellt die Stanzeinheit getaktet Einleger bereit, beispielsweise 10 Einleger pro Arbeitsgang. Die Ausgestaltung der Transporteinheit und der Übergabeeinheit beziehungsweise deren Zusammenwirken ermöglichen aber ein problemloses Übergeben der Einleger an die Tablettiermaschine, die vorzugsweise kontinuierlich arbeitet. Beispielsweise kann es sich bei der Tablettiermaschine um eine Rundlaufpresse handeln, bei der Presslinge in den Öffnungen einer Matrizenscheibe erzeugt werden, wobei die Matrizenscheibe zum Beispiel Bestandteil eines Rotors ist.

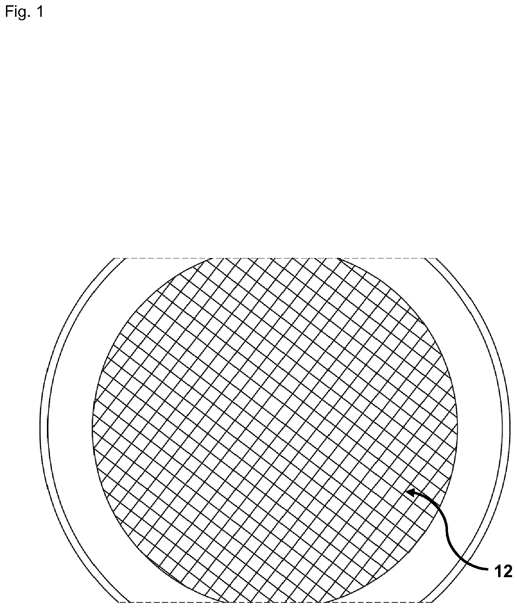

Es ist im Sinne der Erfindung bevorzugt, dass die Einleger mittels der Stanzeinheit aus einem bandförmigen Material hergestellt werden können, vorzugsweise indem sie aus dem bandförmigen Material ausgestanzt werden. Das bandförmige Material wird im Sinne der Erfindung vorzugsweise auch als Ausgangsmaterial bezeichnet. Es kann sich vorzugsweise um eine Metallfolie handeln, die im Sinne der Erfindung auch als Metalldraht bezeichnet wird. Es ist im Sinne der Erfindung ganz besonders bevorzugt, dass durch den Stanzprozess, der mittels der Stanzeinheit durchgeführt wird, Gegenstände zur Verwendung als Einleger in Tabletten oder Presslingen hergestellt werden können, insbesondere Stützgitter, die dazu eingerichtet sind, die mechanische Stabilität von solchen Presslingen zu verbessern, die ohne die Zugabe von stabilisierenden Zusätzen leicht auseinanderfallen oder auseinanderbrechen würden und so nur schwer oder gar nicht mit den üblichen Mitteln weiterverarbeitet werden könnten. Eine beispielhafte Ausgestaltung eines Einlegers, der von einem Stützgitter gebildet wird, ist beispielsweise in Figur 1 dargestellt. Es ist im Sinne der Erfindung bevorzugt, die Stützgitter bevorzugt auch als Drahtgitter, Gitteroblaten, Gitterronden, ausgestanzte Einleger, Gitterscheiben und/oder Metallgitter zu bezeichnen. Die Stützgitter können bevorzugt aus einem bandförmig bereitgestellten Ausgangsmaterial herausgestanzt werden, wobei die Struktur der Einleger von Stanzwerkzeugen der Stanzeinheit festgelegt werden kann. Es ist im Sinne der Erfindung bevorzugt, dass die Stützgitter ein Drahtgewebe aus Metall umfassen oder aus einem solchen gebildet sind. Das Drahtgewebe kann insbesondere Edelstahl 316L umfassen oder daraus bestehen. Dadurch wird vorteilhafterweise jegliche Korrosion besonders wirkungsvoll vermieden, was vor allem angesichts der erhöhten Restfeuchte des zu verpressenden Tablettiermaterials umfassend ein Metalloxid-Pulver, beispielsweise Mangandioxid, erwünscht sein kann.

Die Breite des bandförmigen Materials korreliert vorzugsweise mit dem Durchmesser der herzustellenden Presslinge. Es ist im Sinne der Erfindung insbesondere bevorzugt, dass das Ausgangsmaterial, bevor es der Stanzeinheit zugeführt wird, auf einer Zuführrolle oder einer Zulieferrolle vorliegt. Eine solche Rolle wird im Sinne der Erfindung bevorzugt auch als "Mittel zum Zuliefern" oder als "Rolle mit frischem Drahtgewebe" bezeichnet.

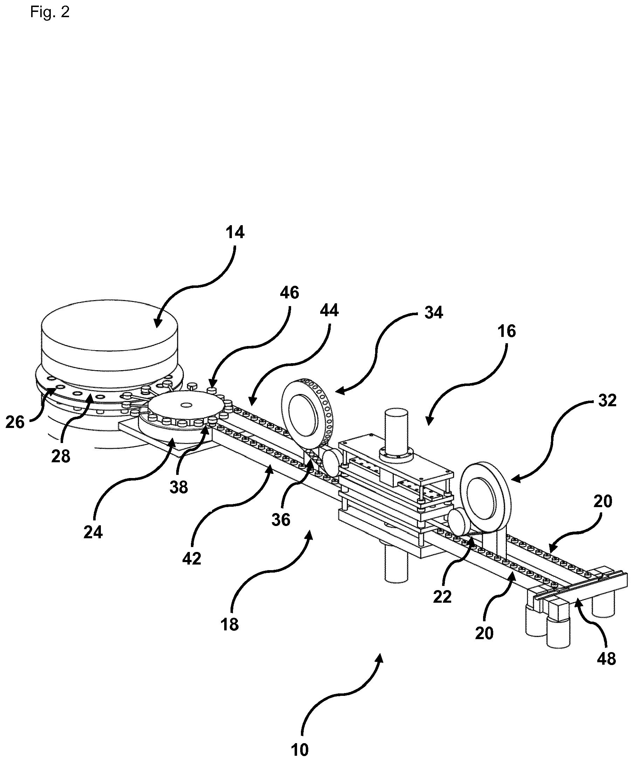

Es ist im Sinne der Erfindung bevorzugt, dass die vorgeschlagene Vorrichtung neben der Stanzeinheit und der Transporteinheit eine Materialeinheit aufweist, die vorzugsweise dazu eingerichtet ist, das bandförmige Material in den Bereich der Stanzeinheit zu liefern und den Rest des bandförmigen Materials, der nach dem Stanzprozess übrigbleibt, aus der Stanzeinheit abzutransportieren und so aufzubewahren, dass es zu keinen Störungen innerhalb des Herstellungsprozesses für die Presslinge kommt. Es ist im Sinne der Erfindung bevorzugt, den Rest des bandförmigen Materials vorzugsweise auch als "Abfall", "ausgestanztes bandförmiges Material" oder "verbliebenes Material" zu bezeichnen. Vorzugsweise umfasst die Materialeinheit neben den Mitteln zum Zuliefern auch Mittel zur Aufnahme des Rests des bandförmigen Materials. Diese Aufnahmemittel können bevorzugt auch als Abfallrolle oder Aufnahmerolle bezeichnet werden. Mit anderen Worten ist es im Sinne der Erfindung bevorzugt, dass die Vorrichtung, insbesondere eine Materialeinheit, die vorzugsweise der Stanzeinheit zugeordnet sein kann und in räumlicher Nähe zu dieser angeordnet ist, Mittel zum Zuliefern des bandförmigen Materials und Mittel zur Aufnahme des ausgestanzten bandförmigen Materials umfasst. Es ist im Sinne der Erfindung bevorzugt, dass die Mittel zum Zuliefern und die Mittel zur Aufnahme des Abfalls auf je einer Seite der Stanzeinheit vorliegen. Es ist ferner bevorzugt, dass zwischen der Stanzeinheit und den Mitteln zum Zuliefern und/oder den Mitteln zur Aufnahme jeweils eine Spannrolle als Niederhalter angeordnet vorliegt. Die Niederhalter sind vorzugsweise dazu eingerichtet, das Ausgangsmaterial für die Stanzeinheit auf einer geeigneten Höhe bereitzustellen, damit das Material besonders einfach und unkompliziert von der Stanzeinheit zu Stützgittern verarbeitet werden kann. In Richtung des Materialtransports kann eine mögliche Abfolge von optionalen und fakultativen Einrichtungen der Erfindung wie folgt lauten: Zuführrolle, erste Spannrolle zum Niederhalten des Ausgangsmaterials, Stanzeinheit, zweite Spannrolle zum Niederhalten des Restmaterials, Aufnahmerolle, Übergabeeinheit, Tablettiermaschine, wobei zwischen den einzelnen Einrichtungen Abschnitte des Transportbandes der Transporteinheit angeordnet vorliegen können. Eine beispielhafte Ausgestaltung der Erfindung ist in Figur 2 dargestellt; eine beispielhafte Ausgestaltung der Materialeinheit in Figur 3.

Ein Gitter stellt im Sinne der Erfindung vorzugsweise eine Anordnung länglicher Bestandteile in gleichmäßigen Abständen dar. Die Gitter, die im Kontext der vorliegenden Erfindung als Stützgitter zur Erhöhung und Verbesserung der mechanischen Stabilität von ansonsten instabilen Presslingen verwendet werden, weisen bevorzugt eine im Wesentlichen kreisförmige Grundfläche auf und sind eben ausgebildet. Eine ebene, d.h. plane, Ausgestaltung bedeutet im Sinne der Erfindung bevorzugt, dass die Höhe des Stützgitters im Vergleich zu dessen Durchmesser sehr gering ist. Die bevorzugten Stützgitter können beispielsweise 20 bis 25 Gitterstäbchen in den beiden Raumrichtungen, die die Gitterebene aufspannen, aufweisen. Es ist im Sinne der Erfindung bevorzugt, die Begriffe "längliche Bestandteile" und "Gitterstäbchen" synonym zu verwenden. Vorzugsweise wird die Struktur des Stützgitters durch die Ausgestaltung der Stanzmittel vorgegeben, die im Sinne der Erfindung bevorzugt auch als Stanzstempel oder Stanzwerkzeuge bezeichnet werden. Beispielsweise können die Bereiche des Stützgitters, an denen Material ausgestanzt ist, also im Stützgitter fehlt, von Erhöhungen auf der Oberseite eines Stanzmittels hervorgerufen werden, während die Gitterstäbchen Vertiefungen auf der Oberseite der Stanzwerkzeuge entsprechen. Es ist im Sinne der Erfindung insbesondere bevorzugt, dass die Stützgitter randlos hergestellt werden. Ein bevorzugter Durchmesser der Stützgitter liegt bei circa 10 bis 22 mm, wobei diese Durchmesser mit den gewünschten Durchmessern der herzustellenden Presslinge korrelieren. Es ist im Sinne der Erfindung insbesondere bevorzugt, dass der Durchmesser des Stützgitters etwa 0,1 mm kleiner ist als der Durchmesser der Presslinge. Insofern ist die Formulierung, dass der bevorzugte Durchmesser der Stützgitter mit den gewünschten Durchmessern der herzustellenden Presslinge korreliert, für den Fachmann nicht unklar, sondern der Fachmann entnimmt dieser Formulierung, dass damit gemeint ist, dass der Durchmesser des Stützgitters etwa 0,1 mm kleiner ist als der Durchmesser der Presslinge. Es kann für andere Anwendungen auch bevorzugt sein, dass die Abweichungen zwischen den Durchmessern der Stützgitter und den Presslingen größer oder kleiner als 0,1 mm sind.

Es ist im Sinne der Erfindung bevorzugt, dass die Stanzeinheit eine Anzahl von N Stanzmitteln umfasst, wobei die Stanzmittel dazu eingerichtet sind, die Einleger aus dem bandförmigen Material auszustanzen. Es ist im Sinne der Erfindung bevorzugt, dass der Stanzvorgang in Stanzmatrizen erfolgt. Die Stanzmatrizen umfassen Öffnungen, in die die Stanzwerkzeuge einfahren können und in denen die Stützgitter aus dem Ausgangsmaterial herausgestanzt werden. Vorzugsweise liegt die Anzahl N der Stanzmittel in einem Bereich von 1 bis 50, bevorzugt von 3 bis 20, besonders bevorzugt von 5 bis 15 und am meisten bevorzugt bei 10 Stanzwerkzeugen. Es sind insbesondere alle Werte und ganze Zahlen zwischen 1 und 50 bevorzugt. Es ist im Sinne der Erfindung ganz besonders bevorzugt, dass die Stanzeinheit getaktet arbeitet. Eine getaktete Arbeitsweise bedeutet im Sinne der Erfindung, dass die Arbeit der Stanzeinheit, d.h. die Herstellung der Stützgitter, in voneinander getrennten Arbeitsgängen erfolgt, wobei bei jedem Arbeitsgang beispielsweise 10 Stützgitter hergestellt werden können. Vorzugsweise korreliert die Anzahl der pro Arbeitsgang erzeugten Gitter mit der Anzahl der Stanzstempel der Stanzeinheit. Beispielsweise können mit einer Stanzeinheit, die beispielsweise 10 Stanzstempel umfasst, pro Arbeitsgang 10 Stützgitter aus dem Ausgangsmaterial ausgestanzt werden. Es ist ferner bevorzugt, dass die ausgestanzten Stützgitter in Gruppen von beispielsweise 10 Stützgittern an die Transporteinheit, insbesondere ihren Carrier, übergeben beziehungsweise von diesen übernommen werden.

Es stellt ein besonderes Verdienst der Erfindung dar, dass eine Vorrichtung bereitgestellt werden kann, mit der eine getaktete Bereitstellung von Stützgittern in Einklang gebracht werden kann mit einer kontinuierlich arbeitenden Tablettiermaschine. Dies wird vorteilhafterweise insbesondere durch die Arbeitsweise der Transporteinheit in Verbindung mit der Übergabeeinheit der Vorrichtung erreicht beziehungsweise dadurch, dass die Arbeit der bevorzugt kontinuierlich produzierenden Tablettiermaschine unabhängig und entkoppelt ist von der Arbeit der vorgeschlagenen Vorrichtung, die die Stanzeinheit, die Transporteinheit und die Übergabeeinheit umfasst. Vorteilhafterweise greifen die Komponenten der vorgeschlagenen Vorrichtung nicht in die Arbeitsweise der Tablettiermaschine ein, so dass zur Ausführung des vorgeschlagenen Verfahrens und im Kontext der vorliegenden Erfindung eine konventionelle Tablettiermaschine eingesetzt werden kann. Beispielsweise kann hierfür eine konventionelle Rundlaufpresse verwendet werden. Es kann im Sinne der Erfindung insbesondere bevorzugt sein, bestehende Anlagen in einer Batterie- oder Knopfzellenfabrik mit den vorgeschlagenen Vorrichtungen auszustatten oder nachzurüsten, um eine Steigerung der Produktionsleistung zu erreichen. Es kann also insbesondere bevorzugt sein, neu hergestellte Tablettiermaschinen mit der vorgeschlagenen Vorrichtung auszustatten oder bestehende Tablettiermaschinen mit der vorgeschlagenen Vorrichtung nachzurüsten. Dadurch steigt die wirtschaftliche Bedeutung der vorliegenden Erfindung, da die vorgeschlagene Vorrichtung sehr flexibel eingesetzt werden kann.

Die Stanzeinheit ist dazu eingerichtet, die Einleger auf die Carrier der Transporteinheit zu übergeben. Es ist im Sinne der Erfindung bevorzugt, dass sich beim Stanzvorgang Carrier unterhalb der Stanzmatrizen befinden, wobei die Anzahl der Carrier vorzugsweise der Anzahl der Stanzmittel entspricht. Es ist beispielsweis bevorzugt, dass die Anzahl der Stanzwerkzeuge und die Anzahl der Carrier jeweils 10 ist. Es ist im Sinne der Erfindung bevorzugt, dass die Carrier bei der Aufnahme der Stützgitter um einen Höhenunterschied Δh gegenüber der normalen Höhe des Transportbandes der Transporteinheit angehoben sind. Es ist im Sinne der Erfindung bevorzugt, dass ein Hub der Carrier von der Transportvorrichtung bis unter die Stanzmatrizen beispielsweise 10 bis 20 mm betragen kann. Mit anderen Worten ist ein Höhenunterschied Δh zwischen der Transportvorrichtung bis unter die Stanzmatrizen vorzugsweise 10 bis 20 mm bevorzugt.

Das Anheben der Carrier im Bereich der Stanzeinheit kann vorzugsweise mit einer Hubeinrichtung erfolgen. Mit anderen Worten ist es im Sinne der Erfindung bevorzugt, dass die Carrier im Bereich der Stanzeinheit mit einer Hubeinrichtung anhebbar sind. Es ist ferner bevorzugt, dass die Hubeinrichtung einen Antrieb umfasst, wobei dieser Antrieb dazu eingerichtet ist, die Hubeinrichtung und die Carrier, die sich in einem Wirkbereich der Hubeinrichtung befinden, anzuheben. Der Wirkbereich der Hubeinrichtung kann beispielsweise mit einem Innenraum der Stanzeinheit zusammenfallen, d.h. die Carrier werden mit der Hubeinrichtung insbesondere innerhalb der Stanzeinheit angehoben.

Die Stanzeinheit kann ferner einen Antrieb für die Stanzmittel umfassen, wobei der Antrieb für die Stanzmittel dazu eingerichtet ist, die Stanzmittel nach unten zu bewegen. Durch diese Bewegung der Stanzmittel wird es vorteilhafterweise möglich, die Einleger aus dem zugeführten bandförmigen Material auszustanzen. Vorzugsweise werden die Stanzmittel durch den Antrieb für die Stanzmittel nach unten bewegt, wobei die Formulierung "nach unten" im Sinne der Erfindung bevorzugt bedeutet, dass die Stanzwerkzeuge durch ihren Antrieb von einem oberen Bereich der Stanzeinheit in Richtung eines unteren Bereichs der Stanzeinheit bewegt werden. Es ist im Sinne der Erfindung bevorzugt, dass das bandförmige Ausgangsmaterial, aus dem die Stützgitter ausgestanzt werden, zwischen den Carriern und den von oben sich herabbewegenden Stanzstempeln in die Stanzeinheit eingeführt wird. Indem die Stanzstempel, vorzugsweise angetrieben von den entsprechenden Antriebsmitteln und mit großer Geschwindigkeit in die Stanzmatrizen einfahren, werden die Stützgitter erzeugt und auf dem Ausgangsmaterial herausgelöst, so dass sie auf die Carrier der Transporteinheit fallen, die unterhalb des zugeführten Ausgangsmaterials angeordnet sind. Es ist im Sinne der Erfindung bevorzugt, dass der Antrieb für die Stanzmittel oberhalb der Stanzeinheit angebracht vorliegt.

Vorzugsweise werden die Carrier nach Aufnahme der Stützgitter wieder auf das übliche Höhenniveau des Transportbandes der Transporteinheit abgesenkt und die Einleger werden mit der Transporteinheit, insbesondere den Carriern, zur Übergabeeinheit transportiert. Es ist im Sinne der Erfindung, dass der Transport der Carrier innerhalb der Transporteinheit während des Stanzvorgangs unterbrochen wird, aber nach der Übernahme beziehungsweise Aufnahme der Stützgitter durch die Carrier fortgesetzt wird.

Es ist im Sinne der Erfindung bevorzugt, dass von den beispielweise 200 Carriern der Transportvorrichtung 170 bis 180 in Bewegung sind. Die Carrier, die sich innerhalb der Stanzeinheit befinden, sind vorzugsweise in Ruhe. Es kann im Sinne der Erfindung auch bevorzugt sein, dass diejenigen Carrier, die leer sind und sich auf die Stanzeinheit zubewegen, ebenfalls in Ruhe sind und vor ihrer Beladung mit ausgestanzten Einlegern vor der Stanzeinheit verharren. Vorzugsweise bewegen sich die wartenden leeren Carrier, beispielsweise in einer Gruppe von 10 Carriern, zur Beladung in die Stanzeinheit, sobald die zuvor beladenen Carrier auf das Höhenniveau der Transporteinheit abgesenkt und von diesem übernommen wurden.

Es ist im Sinne der Erfindung bevorzugt, dass die Carrier dazu eingerichtet sind, die ausgestanzten Einleger zur Übergabeeinheit zu transportieren, wobei die Übergabeeinheit dazu eingerichtet ist, die ausgestanzten Einleger von den Carriern zu übernehmen. Mit anderen Worten ist vorgesehen, dass die ausgestanzten Stützgitter mittels der Übergabeeinheit von den Carriern über- oder aufgenommen werden, um in Öffnungen einer Matrizenscheibe der Tablettiermaschine eingelegt zu werden. Die Öffnungen der Matrizenscheibe der Tablettiermaschine können bevorzugt auch als Bohrungen innerhalb einer Matrize oder Matrizenscheibe bezeichnet werden.

Es ist im Sinne der Erfindung bevorzugt, dass die Übergabeeinheit Übergabemittel zur Übernahme der ausgestanzten Einleger von den Carriern und zur Übergabe der ausgestanzten Einleger in die Öffnungen einer Matrizenscheibe aufweist. Vorzugsweise können die Übergabemittel auch als Übergabearme bezeichnet werden. Es ist ganz besonders bevorzugt, dass die Zuführung der ausgestanzten Einleger an die Tablettiermaschine kontinuierlich erfolgt. Vorzugsweise können die Übergabearme in einem ausgefahrenen und in einem nicht ausgefahrenen Zustand vorliegen. Vorzugsweise umfasst die Übergabeeinheit einen Zahnkranz, der unterhalb der Übergabemittel angeordnet vorliegt und dazu eingerichtet ist, die Carrier von der Transporteinheit beziehungsweise einem ersten Transportbandabschnitt der Transporteinheit zu übernehmen und an der Matrizenscheibe der Tablettiermaschine vorbei an den zweiten Transportbandabschnitt der Transporteinheit zu übergeben. Mit anderen Worten können die Carrier mit dem Zahnkranz von der Transporteinheit, insbesondere dem ersten Transportbandabschnitt der Transporteinheit, übernommen werden und an den zweiten Transportabschnitt der Transporteinheit übergeben werden. Es ist im Sinne der Erfindung bevorzugt, dass der erste Transportabschnitt den Hinweg der Carrier zur Tablettiermaschine beziehungsweise zur Übergabeeinheit darstellt, während der zweite Transportabschnitt den Rückweg der Carrier von der Übergabeeinheit darstellt. Vorzugsweise sind der erste und der zweite Transportbandabschnitt im Wesentlichen parallel zueinander ausgebildet.

Vorzugsweise ist die Transporteinheit im Wesentlichen ellipsenähnlich ausgebildet, wobei die langen Seiten der im Wesentlichen ellipsenähnlich ausgebildeten Tranporteinheit bevorzugt im Wesentlichen parallel ausgebildet sind und als erster und zweiter Transportbandabschnitt bezeichnet werden. Vorzugsweise werden die beladenen Carrier auf dem ersten Transportabschnitt zur Tablettiermaschine hin transportiert und die leeren Carrier auf dem zweiten Transportabschnitt von der Tablettiermaschine weg transportiert. Vorzugsweise bildet die Übergabeeinheit einen ersten äußeren Punkt der Transporteinheit, während eine bevorzugt gegenüberliegende Umkehrstelle beziehungsweise ein solcher Umkehrpunkt einen zweiten äußeren Punkt der Transporteinheit bilden kann. Es ist im Sinne der Erfindung bevorzugt, dass die Transporteinheit zwischen 50 und 500, bevorzugt zwischen 100 und 400, besonders bevorzugt zwischen 150 und 250 und am meisten bevorzugt etwa 200 Carrier umfasst, wobei jede ganz Zahl zwischen 50 und 500 bevorzugt sein kann.

Es ist im Sinne der Erfindung bevorzugt, dass die Transporteinheit ein umlaufendes Transportband umfasst, das aus Transportabschnitten gebildet wird. Insbesondere umfasst die Transporteinheit vorzugsweise einen ersten Transportbandabschnitt und einen zweiten Transportabschnitt, die vorzugsweise im Wesentlichen parallel zueinander ausgebildet sind, wobei der erste Transportbandabschnitt den Hinweg der beladenen Carrier vom ersten äußeren Punkt der Transporteinheit zur Übergabeeinheit bildet und der zweite Transportbandabschnitt den Rückweg der leeren Carrier von der Übergabeeinheit zum ersten äußeren Punkt der Transporteinheit bildet. Mit anderen Worten ist es im Sinne der Erfindung bevorzugt, dass die Transporteinheit zwei im Wesentlichen parallele Transportabschnitte umfasst, wobei die Stanzeinheit in einem ersten Transportabschnitt angeordnet vorliegt beziehungsweise diesem zugeordnet ist.

Es ist im Sinne der Erfindung besonders bevorzugt, dass der Zahnkranz der Übergabeeinheit die Carrier automatisch nacheinander übernimmt und sie am Rotor der Tablettiermaschine, der beispielsweise die Matrizenscheibe umfasst, vorbeiführt. Es ist im Sinne der Erfindung bevorzugt, dass die Übergabemittel Köpfe aufweisen, wobei die Köpfe der Übergabevorrichtung mit den Übergabearmen axial und/oder in der Höhe verstellt werden können. Wenn die Carrier an der Übergabeeinheit, insbesondere dem Zahnkranz der Übergabeeinheit, angedockt vorliegen, befinden sich die Köpfe der Übergabevorrichtung vorzugsweise mittig über den Carriern und damit bevorzugt auch mittig über den ausgestanzten Einlegern, insbesondere den Stützgittern.

Es ist im Sinne der Erfindung bevorzugt, dass die Übergabemittel in einem vorderen Bereich Übergabeköpfe aufweisen, wobei die Übergabeköpfe auf ihrer Unterseite Öffnungen aufweisen, die mit einem Vakuum oder Druckluft beaufschlagbar sind. Die Übergabeköpfe können daher vorzugsweise auch als Vakuum- oder Saugköpfe bezeichnet werden. Die Übergabeeinheit kann zur Steuerung und zur Bewegung der Übergabeköpfe bewegliche Arme, Steuerkurven, Druckluftanschlüsse und/oder Vakuumanschlüsse umfassen, wobei die Vakuumköpfe insbesondere verschiebbar und/oder absenkbar ausgebildet sind und in die Carrierzentrierung und/oder in die Matrizen der Tablettenpresse eintauchen können. Vorzugsweise sind die Vakuumköpfe dazu eingerichtet, die Einleger von der Transporteinheit beziehungsweise ihren Carriern zu übernehmen. Ferner sind die Vakuumköpfe steuerbar ausgeführt, wobei die Steuerung der Vakuumköpfe bevorzugt mit geeigneten Steuermitteln, zum Beispiel Steuerkurven, erfolgt.

Es ist im Sinne der Erfindung bevorzugt, dass die Übergabemittel dazu eingerichtet sind, die ausgestanzten Einleger von den Führungen und/oder Zentrierungen der Carrier zu übernehmen, wobei diese Übernahme vorzugsweise im nicht-ausgefahrenen Zustand der Übergabemittel erfolgt. Dazu befinden sich die Köpfe der Übergabemittel vorzugsweise mittig oberhalb der Carrier beziehungsweise oberhalb der Führungen der Carrier. Es kann im Sinne der Erfindung bevorzugt sein, dass im Moment der Übergabe ein etwaiges Vakuum, mit dem die ausgestanzten Einleger in den Führungen der Carrier gehalten werden, ausgeschaltet wird und/oder dass die Trennung der ausgestanzten Einleger von den Führungen der Carrier mit einem Druckluftstoß erleichtert wird. Es kann ebenso bevorzugt sein, dass im Moment der Übergabe die Köpfe der Übergabemittel mit einem Vakuum beaufschlagt werden, um die ausgestanzten Einleger an den Köpfen der Übergabemittel zu befestigen beziehungsweise die Aufnahme der Einleger zu erleichtern. Es ist im Sinne der Erfindung bevorzugt, dass die Übergabemittel nach erfolgter Über- beziehungsweise Aufnahme der ausgestanzten Einleger ausgefahren werden, so dass sie vorzugsweise in einem ausgefahrenen Zustand vorliegen. Es ist im Sinne der Erfindung insbesondere bevorzugt, dass die Übergabemittel auf eine Arbeitslänge ausfahrbar sind beziehungsweise auf eine Arbeitslänge ausgefahren werden können. Vorzugsweise bewegen sich die Übergabemittel im ausgefahrenen Zustand oder beim Ausfahren mit den ausgestanzten Einlegern in Richtung der Tablettiermaschine beziehungsweise in Richtung des Teilkreises der Matrizenscheibe oder ihrer Öffnungen.

Es ist im Sinne der Erfindung bevorzugt, dass die Übergabeeinheit so ausgebildet ist, dass die Übergabemittel in einem ausgefahrenen Zustand einen Teilkreis der Matrizenscheiben der Tablettiermaschine überstreichen. Die Übergabeeinheit und die Länge und Konstruktion der Übergabemittel ist so beschaffen, dass es eine erhebliche Überschneidung zwischen den Übergabemitteln und der Matrizenscheibe gibt. Es ist ganz besonders bevorzugt, dass sich die Übergabemittel im ausgefahrenen Zustand über einen Teilkreis der Matrizenscheibe bewegen. Es ist im Sinne der Erfindung bevorzugt, dass eine Größe dieses Teilkreises durch einen Winkelgradwert festgelegt werden kann. Es ist im Sinne der Erfindung bevorzugt, dass der Überschneidungswinkel in einem Bereich zwischen 60 und 90° liegt. Dies bedeutet im Sinne der Erfindung bevorzugt, dass der Teilkreis, auf dem die Übergabeköpfe über der Matrizenscheibe mitfahren, von einem Kreissektor gebildet wird, der einen Öffnungswinkel von 60 und 90° aufweist.

Ferner ist es ganz besonders bevorzugt, dass sich die Köpfe der Übergabemittel für einen Zeitraum Δt im Wesentlichen oberhalb der Öffnungen der Matrizenscheibe bewegen, so dass die ausgestanzten Einleger, wenn ein etwaiges Vakuum, mit den die Köpfe der Übergabemittel beaufschlagt sein können, abgeschaltet wird, in die Öffnungen der Matrizenscheibe fallen können. Es ist im Sinne der Erfindung ganz besonders bevorzugt, dass durch eine Synchronisation der Übergabemittel mit der Bewegung der Matrizenscheibe die Köpfe der Übergabemittel dem Teilkreis der Matrizenscheibe, der von den Übergabearmen überstrichen wird, folgen. Es ist im Sinne der Erfindung bevorzugt, dass eine Bewegung der Übergabemittel synchron zu einer Bewegung der Matrizenscheibe der Tablettiermaschine erfolgt. Vorzugsweise sind die Bewegung der Übergabemittel und die Bewegung der Matrizenscheibe der Tablettiermaschine synchronisiert, d.h. aufeinander abgestimmt.
Die Synchronisation der Bewegungen der Übergabemittel und der Matrizenscheibe der Tablettiermaschine leistet einen wesentlichen Beitrag zu der besonders genauen Positionierung der Stützgitter in die Matrizenöffnungen.

Bevorzugt ist außerdem, dass die Drehgeschwindigkeit der Übergabeeinheit variabel und synchron mit der Rotorgeschwindigkeit der Tablettiermaschine einstellbar ist. Es ist im Sinne der Erfindung bevorzugt, dass die Übergabeeinheit die Einleger von der Transporteinheit übernimmt. Die Übergabeeinheit ist durch die Vakuumköpfe in der Lage, die Einleger von den Carriern anzusaugen. Aufgrund der bevorzugt im Wesentlichen identischen Drehgeschwindigkeit der Übergabeeinheit und des Rotors der Tablettiermaschine kann eine kontrollierbare Übergabe der Einleger in die Matrizenöffnungen der Tablettenmaschine erfolgen. Die bevorzugt im Wesentlichen identische Drehgeschwindigkeit der Übergabeeinheit und des Rotors der Tablettiermaschine wird im Sinne der Erfindung bevorzugt auch als synchroner Betrieb der Übergabeeinheit und der Tablettiermaschine bezeichnet. Überraschend war die Präzision und Reproduzierbarkeit, mit der die Einleger einzeln in die Matrizenöffnungen der Tablettenmaschine einlegbar sind. Überraschenderweise können beispielsweise konventionelle Tablettiermaschine mit der vorliegenden Erfindung zusammenwirken. Dadurch ist die Erfindung vielfältig einsetzbar und kann auf die unterschiedlichsten Anforderungen individuell beispielsweise in Bezug auf Durchsatz und Geschwindigkeit abgestimmt werden.

Es stellt ein besonderes Verdienst der vorliegenden Erfindung dar, dass durch das Zusammenwirken der vorgeschlagenen Vorrichtung mit der Tablettiermaschine eine so große Überschneidung zwischen den Übergabemitteln und der Matrizenscheibe erreicht werden kann, dass eine besonders präzise und sichere Übergabe der Einleger in die Matrizenöffnungen gewährleistet wird. Insbesondere war es überraschend, dass die Überschneidung für einen so großen Winkelgradbereich erreicht werden kann. Dadurch ergibt sich eine relativ lange Zeitspanne Δt für die Übergabe der ausgestanzten Einleger in die Matrizenöffnungen, so dass eine besonders präzise Positionierung der ausgestanzten Einleger in die Matrizenöffnung ermöglicht wird. Dadurch kann die Anzahl der fehlerhaften Presslinge auf ein Minimum reduziert werden.

Eine präzise Positionierung, wie mit der vorgeschlagenen Erfindung erreicht werden kann, ist vor allem dann wichtig, wenn die Einleger nur wenig kleiner sind als die Öffnungen der Matrizenscheibe beziehungsweise die Durchmesser der Presslinge. Da mit dem vorgeschlagenen Verfahren und mit der vorgeschlagenen Vorrichtung insbesondere auch größere Presslinge, beispielsweise mit Durchmessern zwischen 10 und 22 mm, verpresst werden können und bei diesen Presslingen eine optimale Stabilitätsverbesserung insbesondere dann erreicht wird, wenn die Einleger nur wenig kleiner sind als die Öffnungen der Matrizenscheibe, können mit dem vorgeschlagenen Verfahren Presslinge, die beispielsweise Mangandioxid umfassen, besonders gut hergestellt werden und weiterverarbeitet werden. Es ist im Sinne der Erfindung bevorzugt, dass die Einleger beispielsweise einen um 0,1 mm kleineren Durchmesser aufweisen als die Presslinge, die mit der vorliegenden Erfindung erzeugt werden.

Es kann im Sinne der Erfindung auch bevorzugt sein, dass die Köpfe der Übergabemittel ganz oder teilweise in die Öffnungen der Matrizenscheibe abgesenkt werden, bevor die Einleger auf das Tablettiermaterial innerhalb der Matrizenöffnungen abgelegt werden. Die ausgestanzten Einleger werden dann durch die Tablettiermaschine mit einem Tablettiermaterial zu einem Pressling aufweisend einen Einleger, insbesondere ein Stützgitter, verarbeitet.

In einem weiteren Aspekt betrifft die Erfindung ein Verfahren zur Herstellung eines Presslings, der einen Einleger aufweist. Das vorgeschlagene Verfahren umfasst die folgenden Schritte:
a) Bereitstellen eines bandförmigen Material (durch Mittel zum Zuliefern, Zuführrolle, Zulieferrolle) an eine Stanzeinheit
b) Ausstanzen von Einlegern aus dem bandförmigen Material in der Stanzeinheit
c) Transport der ausgestanzten Einleger zu einer Übergabeeinheit
d) Übergabe der ausgestanzten Einleger mit (Übergabemittel) der Übergabeeinheit in Öffnungen einer Matrizenscheiben einer Tablettiermaschine
e) Herstellung eines Presslings, der einen Einleger aufweist.

Die für die vorgeschlagene Vorrichtung beschriebenen Definitionen, technischen Wirkungen und Vorteile gelten für das vorgeschlagene Verfahren analog. Es ist darüber hinaus bevorzugt, dass das vorgeschlagene Verfahren mit der vorgeschlagenen Vorrichtung beziehungsweise mit einem System umfassend eine Tablettiermaschine und die vorgeschlagene Vorrichtung ausgeführt werden kann. Vorzugsweise können die Merkmale, die für die Vorrichtung beschrieben werden, beliebig miteinander kombiniert werden und die Merkmale können in jeder Kombination erfindungswesentlich sein. Insbesondere gelten die für die Vorrichtung beschriebenen Merkmale auch im Zusammenhang mit dem vorgeschlagenen Verfahren als offenbart, und umgekehrt.

Es ist im Sinne der Erfindung bevorzugt, dass das Austanzen der Einleger getaktet erfolgt, während die Zuführung der ausgestanzten Einleger an die Tablettiermaschine kontinuierlich erfolgt. Es ist im Sinne der Erfindung bevorzugt, dass das Bereitstellen des bandförmigen Materials mittels einer Zuführrolle oder Zulieferrolle erfolgen kann, wobei diese Rollen vorzugsweise als "Mittel zum Zuliefern" des bandförmigen Materials bezeichnet werden. Die Rollen können zu einer Materialeinheit gehören, die Bestandteil der Vorrichtung, insbesondere der Stanzeinheit, ist. Es kann ferner bevorzugt sein, dass das Ausstanzen der Einleger durch Stanzmittel erfolgt, die vorzugsweise Bestandteile der Stanzeinheit sind. Vorzugsweise handelt es sich bei den Einlegern um Stützgitter zur mechanischen Stabilisierung von Presslingen. Es ist ganz besonders bevorzugt, dass es sich bei dem zu verpressenden Tablettiermaterial bevorzugt um "feuchtes" Metalloxid-Pulver, insbesondere Manganoxid-Pulver, handeln kann. Es ist ganz besonders bevorzugt, dass mit dem vorgeschlagenen Verfahren und der vorgeschlagenen Vorrichtung Mangandioxid-Pulver mit einer relativ hohen Restfeuchte verpresst werden kann, wobei die Restfeuchte beispielsweise aus vorhergehenden chemischen Behandlungen stammt. Es kann aber auch bevorzugt sein, andere Stoffe, insbesondere solche, die zu Herstellung von Kathoden von Knopfzellen geeignet sind, mit dem vorgeschlagenen Verfahren und der vorgeschlagenen Vorrichtung zu verpressen. Vorzugsweise weisen die erhaltenen Presslinge einen Durchmesser von 10 bis 22 mm und eine Höhe von 0,5 bis 3 mm auf. Es ist ferner bevorzugt, dass die ausgestanzten Einleger einen Durchmesser aufweisen, der beispielsweise 0,1 mm kleiner ist als der Durchmesser der Presslinge. Vorzugsweise kann der Transport der ausgestanzten Einleger zu der Übergabeeinheit folgende weitere Verfahrensschritte umfassen:
c1) Bereitstellen von Carriern durch eine Transporteinheit
c2) Aufnahme der ausgestanzten Einleger durch die Carrier in der Stanzeinheit.

Es ist im Sinne der Erfindung besonders bevorzugt, wenn die Bereitstellung der Carrier durch die Transporteinheit innerhalb der Stanzeinheit stattfindet, d.h. wenn die Carrier in der Stanzeinheit bereitgestellt werden. Vorzugsweise werden auch die ausgestanzten Einleger innerhalb der Stanzeinheit von den Carriern der Transporteinheit übernommen.

Die Erfindung wird im Folgenden durch Beispiele und konkrete Ausführungsmöglichkeiten beschrieben: Die Erfindung kann vorteilhafterweise bei der Herstellung von Lithium-Mangandioxid-Rundzellen Verwendung finden. Im Gegensatz zu der Fertigung von Silberoxid-Knopfzellen sind Lithium-Batterien anders aufgebaut, so dass an einzelne Komponenten auch andere Anforderungen gestellt werden. Das Mangandioxid wird bevorzugt einer speziellen chemischen Behandlung unterzogen und mit einer relativ hohen Restfeuchtigkeit der Rundlaufpresse zugeführt, in der das Mangandioxid-Pulver zu einer runden Scheibe gepresst wird. Durch den relativ großen Durchmesser, die geringe Dicke und die relativ hohe Feuchtigkeit haben die Tabletten nachteiligerweise keine hohe Festigkeit und Tablettenhärte. Die Tabletten sind in diesem Zustand sehr empfindlich und können zumeist nicht ohne Beschädigungen zu den weiteren Produktionsstationen transportiert werden.

Um eine automatisierte, effektive Fertigung mit diesen empfindlichen Tabletten zu realisieren, muss die Tablette mit Hilfe eines "Stützkorsetts" stabilisiert werden. Dieses Stützkorsett kann ein dünnes Drahtgitter sein, welches als runde Scheibe, vorzugsweise nach dem Füllen der Matrizen einer Rundlaufpresse und vor dem Verdichten des Pulvers, auf die Oberfläche des Pressmaterials aufgelegt wird. Es erfolgt dann beispielsweise der Pressvorgang durch die Vor- und/oder Hauptdruckstation der Rundlaufpresse, wobei das in der Matrize befindliche Pressmaterial mit dem oben aufliegenden runden Drahtgitter mittels der Ober- und Unterstempel auf die gewünschte Presslingshöhe gepresst wird. Hierbei wird das Drahtgitter in die Oberfläche des Presslings eingepresst, wobei es sich innig mit dem Pressmaterial verbindet und somit den Pressling stabilisiert. Es ist im Sinne der Erfindung bevorzugt, dass die fertigen Tabletten nach dem Pressvorgang mit dem eingepressten Drahtgitter einer 24-stündigen Wärmebehandlung unterzogen werden. Dabei trocknet die Mangandioxid-Pressmasse aus und erhärtet dabei, so dass nun eine sehr stabile Verbindung zwischen dem Pressling und dem Stützgitter entstanden ist. Nun kann der so stabilisierte Pressling ohne Beschädigungen durch die nachfolgenden Prozessstationen transportiert werden.

Es ist im Sinne der Erfindung bevorzugt, dass die vorgeschlagene Vorrichtung eine Stanzeinheit umfasst, die beispielsweise mit 10 Stanzwerkzeugen ausgestattet ist. Die Stanzeinheit, beziehungsweise eine ihr zugeordnete Materialeinheit, kann vorzugsweise einen Niederhalter für das Gitterband, eine Rolle mit dem frischen Gitterband und eine Rolle mit dem ausgestanzten Abfallband, sowie Rollenantriebe umfassen. Beim Stanzvorgang befinden sich beispielsweise 10 Carrier angehoben unter beispielsweise 10 Stanzmatrizen, die die ausgestanzten Gitterscheiben aufnehmen können. Nachdem die 10 Carrier mit den Gitteroblaten gefüllt sind, werden die Carrier wieder auf die Höhe der Transporteinheit abgesenkt und durch die Transporteinheit einer Übergabevorrichtung, die sich beispielsweise in räumlicher Nähe zu einer Rundlaufpresse befindet, zugeführt. Der sich unterhalb der beweglichen Vakuumarme befindliche Zahnkranz ist vorzugsweise dazu eingerichtet, automatisch die Carrier nacheinander zu übernehmen sie dem Rotor der Rundlaufpresse zuzuführen beziehungsweise am Rotor vorbeizuführen. Wenn die Carrier an die Übergabevorrichtung angedockt sind, befinden sich die Köpfe der Übergabearme vorzugsweise mittig über den ausgestanzten Gitterronden, die in der Führung und/oder einer Zentrierung der Carrier liegen. Auf dem Weg zur Matrizenplatte werden die Köpfe abgesenkt und ein Vakuum kann aktiviert werden, welches die ausgestanzten Gitterscheiben anzieht. Bevor die Übernahmeköpfe den Teilkreis der Matrizen der Rundlaufpresse erreichen, werden die Köpfe angehoben und auf die Arbeitslänge ausgefahren. Die Teilkreise der Matrizenscheibe und der Übergabeköpfe überschneiden sich vorteilhaferweise erheblich. Durch eine Synchronisierung der Arme mit der Matrizenscheibe folgen die Köpfe über die Länge der Überschneidung dem Matrizenteilkreis. Dabei werden die Köpfe abgesenkt und das Vakuum wird abgeschaltet, wenn das Unterteil des Kopfes innerhalb der Matrizenbohrung ist, so dass das ausgestanzte Gitter auf das vorzugsweise vorverdichtete und planierte Pressmaterial fällt. Eventuell wird dieser Vorgang noch durch einen kurzen Druckluftimpuls unterstützt.

Bei der Tablettiermaschine, die in Verbindung mit der vorgeschlagenen Vorrichtung beziehungsweise zur Durchführung des vorgeschlagenen Verfahrens verwendet wird, kann es sich bevorzugt um eine Rundlaufpresse handeln. Die Rundlaufpresse ist vorzugsweiset für die folgenden Operationen eingerichtet beziehungsweise umfasst die folgenden Funktionseinheiten:
1. Füllgerät für das Mangandioxid-Pulver
2. Anpressstation
3. Übergabevorrichtung
4. Optische Kontrolle, ob der Einleger, insbesondere das Stützgitter, eingelegt ist
5. Vorverdichtung
6. Hauptverdichtung
7. Ausstoß der Presslinge
8. Aussortieren von fehlerhaften Presslingen, erkennbar beispielsweise an fehlendem Einleger beziehungsweise geringen Gewicht des Presslings
9. Abtransport der "guten" Presslinge

Die Rundlaufpresse ist vorzugsweise mit einem im Wesentlichen ringförmigen Transportsystem für die Carrier mit der Stanzeinheit verbunden. Im permanenten Umlauf befinden sich beispielsweise 200 Carrier. Die Stanzeinheit führt pro Minute zum Beispiel 20 Stanzvorgänge aus, so dass die Rundlaufpresse pro Minute 200 Pressling aus Mangandioxid-Pulver mit einem eingepressten Stützgitter herstellen kann. Somit ist eine Rundlaufpresse mit beispielsweise 29 Presswerkzeugen um den Faktor 10 bis 20-mal leistungsfähiger als die konventionellen getakteten Systeme, die im Stand der Technik bekannt sind. Wenn als Tablettiermaschine beispielsweise eine Doppelrundlaufpresse mit einer größeren Anzahl an Presswerkzeugen eingesetzt wird, kann die Produktionsleistung weiter gesteigert werden.

Es ist im Sinne der Erfindung bevorzugt, dass das ausgestanzte Drahtgitter ähnlich groß ist wie der Pressling. Es ist insbesondere bevorzugt, dass der Durchmesser des Einlegers beispielsweise circa 0,1 mm kleiner ist als der Durchmesser der Mangan-Tablette. Dieser geringe Größenunterschied führt dazu, dass die Übergabe der ausgestanzten Drahtgitterscheibe in die mit Mangan-Pulver gefüllte Matrize äußerst präzise erfolgen muss. Diese Anforderung erfüllt die vorliegende Erfindung vorzugsweise dadurch, dass die Übergabearmt der Übergabeeinheit einige Winkelgrade auf dem Teilkreis der Matrizen mitfahren und so eine präzise Übergabe der Metallgitter in die Matrizenbohrung gewährleisten können. Vorzugsweise umfasst die Übergabeeinheit eine Steuereinrichtung, die dazu eingerichtet ist, die Übernahme der Einleger, das Ein- und Ausfahren der Übergabearme und/oder das Anheben und Absenken der Übergabearme zu steuern und mit den übrigen Komponenten der vorgeschlagenen Vorrichtung und/oder der Tablettiermaschine beziehungsweise dessen Bewegung abzustimmen und zu koordinieren.

Offenbart wird vorzugsweise ein Verfahren zur Herstellung einer Kathode aus Mangandioxid-Pulver beispielsweise unter Verwendung einer Rundlauf-Tablettenpresse. Die erzeugten Kathoden können vorzugsweise für Lithium-Mangan-Rundzellen mit mittlerem und großem Durchmesser verwendet werden. Die Rundlaufpresse kann mit einer Stanzvorrichtung und einem Transportsystem für Carrier, sowie einer Übernahme- und Übergabevorrichtung ausgestattet sein, wobei die Übernahme- und Übergabevorrichtung im Sinne der Erfindung auch als Übergabevorrichtung bezeichnet wird. Vorzugsweise bilden die Stanzvorrichtung, das Transportsystem und Übergabevorrichtung die vorgeschlagene Vorrichtung, die der Tablettiermaschine vorgeschaltet sein kann. Vorzugsweise können mit der Stanzeinheit getaktet Metallgitterplättchen ausgestanzt und mit den Carriern zur Rundlaufpresse transportiert werden, wobei die Metallplättchen mit den Armen der Übergabevorrichtung von den Carriern übernommen und kontinuierlich in die gefüllten Matrizenbohrungen auf das Pressmaterial abgelegt werden, um mit der Vor- und/oder Hauptpressstation der Rundlaufpresse zu einem Verbundpressling verdichtet zu werden.

Es ist im Sinne der Erfindung besonders bevorzugt, dass der erzeugte Mangandioxid-Pressling nur mit der Drahtgitterverstärkung stabil genug ist, um die weiteren mechanischen Arbeitsschritte ohne Beschädigungen zu überstehen. Vorzugsweise entspricht der Durchmesser des ausgestanzten Drahtgitterplättchens im Wesentlichen dem Durchmesser des Presslings, so dass das Plättchen sehr präzise in die Matrize eingeführt werden muss. Vorzugsweise können mit der integrierten Stanzeinheit bevorzugt gleichzeitig beispielsweise 10 Metallgitterplättchen ausgestanzt werden. Es ist im Sinne der Erfindung bevorzugt, dass zum Beispiel 10 Carrier zur Übernahme der ausgestanzten Plättchen vorzugsweise gleichzeitig mittels eines zentralen Antriebs angehoben werden, um die Fallhöhe für die ausgestanzten Einleger zu minimieren. Vorzugsweise können die Carrier nach der Aufnahme der Plättchen wieder auf die Transporteinheit abgesetzt werden. Es ist im Sinne der Erfindung bevorzugt, dass das Drahtgitterband von einer großen Rolle der Stanze zugeführt wird. Die Material- und Spannrollen können mit einer Bremse ausgestattet sein. Es ist ferner bevorzugt, dass eine weitere Rolle das ausgestanzten Abfallband aufwickelt, wobei diese Rolle vorzugsweise zwischen Stanzeinheit und Übergabevorrichtung im Bereich des ersten Transportbandabschnitts angeordnet vorliegt. Vorzugsweise ist die Abfallrolle mit einem eigenen Antrieb versehen. Es ist im Sinne der Erfindung bevorzugt, dass Die Material-, Spann- und Abfallrollen eine Materialeinheit bilden, die Bestandteile der vorgeschlagenen Vorrichtung beziehungsweise der Stanzeinheit sein kann. Vorzugsweise werden die ausgestanzten Einleger mit Carriern der Tablettiermaschine zugeführt, wobei für den Transport der Carrier die Transportvorrichtung und die Übernahme- und Übergabevorrichtung zuständig sind. Es ist im Sinne der Erfindung bevorzugt, dass die Transporteinheit drei Komponenten umfassen kann, insbesondere einen vorderen ersten Transportbandabschnitt, einen hinteren zweiten Transportbandabschnitt und einen dritten Transportbandabschnitt im Umkehrpunkt der Transportvorrichtung, mit dem die leeren Carrier von dem zweiten Transportbandabschnitt auf den ersten Transportbandabschnitt überführt werden. Dieser dritte Transportbandabschnitt kann vorzugsweise auch als Quertransportvorrichtung bezeichnet werden.

Es ist im Sinne der Erfindung bevorzugt, dass die Stanzeinheit getaktet arbeitet. Vorzugsweise kann die Stanzeinheit auch als Stanze bezeichnet werden. Es ist im Sinne der Erfindung bevorzugt das Einlegen der Metallplättchen in die Matrizen der Rundlaufpresse kontinuierlich erfolgt. Vorzugsweise werden die Pulversäulen in den Matrizenbohrungen des Rotors der Rundlaufpresse vor dem Einlegen der Drahtgitterplättchen durch eine Anpressstation geglättet. Insbesondere werden die Oberflächen der Pulversäulen geglättet. Es ist ferner bevorzugt, dass die Pulversäule mit dem Metallplättchen mittels Vor- und/oder Hauptpresskraft zu einem stabilen Verbundpressling gepresst werden. Vorzugsweise kann mittels einer Presskraftkontrolle ermittelt werden, ob beispielsweise das Drahtgitter fehlt oder das Tablettengewicht nicht dem Sollwert entspricht. Derartige fehlerhafte Tabletten werden automatisch von den "guten" Presslingen getrennt und gelangen nicht in den weiteren Produktionsprozess.

Insbesondere wird ein Verfahren offenbart zur Herstellung einer dünnen Kathode aus Mangandioxid mit hoher Feuchtigkeit mit einer Rundlaufpresse, wobei in das Herstellungsverfahren beziehungsweise die Herstellungsvorrichtung eine Stanze integriert ist, die getaktet von einer Zuführrolle Metallgitterplättchen herstellt, die wiederum mit Hilfe von Carriern kontinuierlich der Rundlaufpresse zugeführt und mit den Armen einer Übernahme- und Übergabeeinheit in die gefüllten Matrizenbohrungen der Rundlaufpresse eingelegt werden. Nach dem Tablettieren ergibt dieser Verbundpressling - durch das Stützgitter - eine erhebliche Verbesserung der Bruchfestigkeit, so dass die Presslinge die weitern mechanischen Produktionsschritte ohne Beschädigungen überstehen.

Es war vollkommen überraschend, dass eine Rundlaufpresse bereitgestellt werden kann, bei der die Elemente der vorgeschlagenen Vorrichtung dergestalt zusammenwirken, dass eine getaktete Bereitstellung der Einleger durch die Stanzeinheit in eine kontinuierliche Zuführung in den Pressbereich einer Tablettiermaschine umgewandelt werden kann.

Die Erfindung wird anhand der nachfolgenden Figuren näher beschrieben; es zeigt:
- Figur 1: Darstellung einer bevorzugten Ausführungsform eines Einlegers
- Figur 2: Darstellung einer bevorzugten Ausführungsform einer Vorrichtung und eines Rotors einer Tablettiermaschine
- Figur 3: Darstellung einer bevorzugten Ausführungsform einer Stanzeinheit und einer Materialeinheit
- Figur 4: Darstellung einer bevorzugten Ausführungsform einer Übergabeeinheit
- Figur 5: Darstellung eines beispielhaften Übergabeprozesses der Einleger von der Transporteinheit an die Tablettiermaschine durch die Übergabeeinheit

Figur 1 zeigt eine bevorzugte Ausführungsform eines Einlegers (12), der sich auf dem Mangandioxid-Pressling befindet. Bei den Presslingen kann es sich insbesondere um Presslinge zur Herstellung von Knopfzellen handeln, wobei solche Knopfzellen häufig als Batterien in elektrischen oder elektronischen Geräten verwendet werden. Eine Untergruppe dieser Knopfzellen wird aus Kathoden umfassend ein Metalloxid-Pulver hergestellt, wobei für einige Knopfzellentypen Mangandioxid als Ausgangsmaterial aufgrund seiner günstigen chemischen Eigenschaften ganz besonders bevorzugt ist. Insbesondere zeigt Figur 1 eine Draufsicht auf ein Gehäuseunterteil einer Lithium-Mangan-Rundzelle, in der sich in der Mitte ein Mangandioxid-Pressling mit einem eingepressten Stützgitter (12) befindet. Der Pressling und das Stützgitter (12) weisen im Wesentlichen ähnliche Durchmesser auf, die beispielsweise um 0,1 mm voneinander abweichen. Das Stützgitter (12) ist vorzugsweise eben ausgebildet und kann beispielsweise 20 bis 25 Gitterstäbchen in den beiden Raumrichtungen, die eine Gitterebene aufspannen, umfassen. Die Gitterstäbchen sind in Figur 1 durch die schwarzen Linien symbolisiert, während durch die in weiß dargestellten Gitteröffnungen hindurch das Tablettiermaterial zu sehen ist. Um das Drahtgitter (12) herum ist kreisförmig das Gehäuse einer Lithium-Mangandioxid-Rundzelle dargestellt, in der sich mittig der Pressling mit dem Stützgitter (12) befindet.

Figur 2 zeigt eine bevorzugte Ausführungsform einer Vorrichtung (10) und eines Rotors (kein Bezugszeichen) einer Tablettiermaschine (14), wobei die Vorrichtung (10) vorzugsweise mit der Tablettiermaschine (14) zur Durchführung des vorgeschlagenen Verfahrens zusammenwirkt. Die Tablettiermaschine (14) ist vorzugsweise nicht Bestandteil der Vorrichtung (10), kann aber mit der Vorrichtung (10) zusammen ein System bilden, das insbesondere durch Durchführung des vorgeschlagenen Verfahrens geeignet ist.

Die in Figur 2 dargestellt bevorzugte Ausführungsform einer Vorrichtung (10) umfasst eine Stanzeinheit (16), eine Transporteinheit (18) und eine Übergabeeinheit (24), wobei die Übergabeeinheit (24) bevorzugt auch als Übergabevorrichtung bezeichnet werden kann. Die dargestellte Stanzeinheit (16) umfasst eine Materialeinheit (kein Bezugszeichen), die ihrerseits eine Zuführrolle (32) für frisches bandförmiges Material (22), eine erste Spannrolle (kein Bezugszeichen) zum Niederhalten des bandförmigen Materials (22), eine zweite Spannrolle (kein Bezugszeichen) zum Niederhalten des ausgestanzten bandförmigen Materials (36) und eine Abfallrolle (34) umfasst. Es ist im Sinne der Erfindung bevorzugt, dass die Materialeinheit in räumlicher Nähe zur Stanzeinheit (16) vorliegt.

Die Stanzeinheit (16) kann beispielsweise 10 Stanzstempeln umfassen, die im Inneren der Stanzeinheit (16) die Einleger (12) aus dem zugeführten bandförmigen Material (22) herausstanzen. Das bandförmige Material (22) wird vorzugsweise mit der Zuführrolle (32) zugeführt. Es ist im Sinne der Erfindung bevorzugt, dass die Carrier (20) im Bereich der Stanzeinheit (16) von Hubvorrichtungen vorzugsweise gleichzeitig abgehoben werden können, bis sie die Stanzmatrizen erreicht haben. Dies geschieht vorzugsweise dann, wenn sich die bevorzugt 10 Carrier (20) innerhalb der Stanzeinheit (16) befinden. Die Stanzmittel können mit einer Antriebsvorrichtung nach unten bewegt werden, so dass die Einleger (12) aus dem zugeführten Metallband (22) ausgestanzt werden, wobei die ausgestanzten Einleger (12) vorteilhafterweise durch den Aufbau der Stanzeinheit (16) auf die Carrier (20) beziehungsweise Führungen auf den Carriern (20) fallen. Anschließend fahren die Stanzwerkzeuge bevorzugt zurück in eine obere Ruheposition, ein Band-Niederhalter wird angehoben und das ausgestanzte Band (36) wird in Richtung der Abfallspule (34) transportiert, bis sich wieder frisches Band (22) unter den Stanzwerkzeugen befindet. Dann kann ein neuer Stanzvorgang eingeleitet werden.

In der Transporteinheit (18) können beispielsweise ca. 200 Carrier (20) vorhanden sein, die vorzugsweise kontinuierlich im Umlauf sind. Der Stanzvorgang erfolgt getaktet, das Einlegen der ausgestanzten Drahtgitterscheiben (12) erfolgt vorzugsweise kontinuierlich. Wenn die bevorzugt 10 gefüllten Carrier (20) im Bereich der Stanzeinheit (16) auf der Transporteinheit (14) abgesetzt wurden, werden sie in Richtung der Übergabevorrichtung (24) transportiert. Dadurch wird der Raum unterhalb der Stanzeeinheit (16) frei und kann mit vorzugsweise 10 leeren Carriern (20) aufgefüllt werden, die dann erneut mit bevorzugt 10 ausgestanzten Drahtgitterplättchen (12) beladen werden. Die mit den Einlegern (12) beladenen Carrier (20) werden durch die Transporteinheit (18) zur Übergabeeinheit (24) transportiert. Dort werden die Carrier (20) von einen Zahnkranz (38) bevorzugt einzeln nacheinander übernommen und in Richtung der Matrizenscheibe (28) der Tablettiermaschine (14) transportiert. Oberhalb der Carrier (20) befinden sich vorzugsweise genau mittig über den Einlegern (12) die nicht-ausgefahrenen oder eingezogenen Köpfe (46) der Übergabearme (40) der Übergabeeinheit (24). Bei der Drehung der Einheit (24) in Richtung Matrizenscheibe (28) der der Tablettiermaschine (14) können die Köpfe (46) abgesenkt werden. Ferner kann ein Vakuum aktiviert werden, das die Einleger (12) ansaugt und von den Carriern (20) trennt. Anschließend werden die Köpfe (46) leicht angehoben und soweit ausgefahren, dass sich der Teilkreis der Arme (40) beispielsweise zwei Mal mit einem Teilkreis der Matrizenscheibe (28) der Tablettiermaschine (14) überschneidet. Die Übergabeeinheit (24) dreht sich synchron mit der Matrizenscheibe (28) der Tablettiermaschine (14), sodass der Stichabstand der Matrizen (26) zu dem Abstand der Übergabearme (40) vorzugsweise im Wesentlichen immer gleich ist. Über eine Kurvensteuerung werden ab dem Überschneidungspunkt der beiden Teilkreise die Übergabearme (40) auf dem Matrizenteilkreis geführt. Über diesen Winkelbereich werden die Übergabearme (40) abgesenkt und, es kann ein Vakuum eingeschaltet werden, sobald sich ein Einleger (12) innerhalb der Matrizenbohrung (26) oberhalb des geglätteten Pressmaterials befindet. Dadurch fällt der Einleger (12) auf das Pressmaterial in der Öffnung (26) der Matrizenscheibe (28). Anschließend werden die Übergabearme (40) wieder angehoben und sie bewegen sich auf ihrem eigenen Teilkreis zur Übernahmeposition eines neuen Einlegers (12). Die gefüllten Matrizen (26) passieren nun die Vor- und/oder Hauptpressstation der Tablettiermaschine (14) und werden so zu einem Pressling verdichtet, der durch das eingepreßte Drahtgitter (12) stabilisiert ist. Anschließend werden die Presslinge aus der Matrize (26) ausgestoßen. Vorher wird durch die Presskraft überprüft, ob ein Drahtgitter (12) eingelegt worden ist und ob das Gewicht des Presslings stimmt. Wenn eine der beiden Kriterien nicht erfüllt ist, wird dieser Pressling als Ausschuss aussortiert. Die "guten" Presslinge verlassen die Tablettiermaschine (14) über ein Transportband oder eine Rutsche. Die leeren Carrier (20) werden über den zweiten Transportbandabschnitt (44) der Transporteinheit (18) vorzugsweise im Wesentlichen parallel zu ersten Transportbandabschnitt (42) zurückgeführt und durch eine Quertransportvorrichtung (48) wieder auf den ersten Transportbandabschnitt (42) geleitet, auf dem sie wieder der Stanzeinheit (16) zugeführt werden für einen neuen Umlauf. Diese Quertransportvorrichtung (48) wird im Sinne der Erfindung auch als dritter Transportbandabschnitt (48) bezeichnet.

Die Transporteinheit (18) umfasst Carrier (20), wobei eine besonders bevorzugte Ausführungsform der Erfindung zum Beispiel etwa 200 Carrier umfasst. Die Carrier (20) können als Hohlzylinder oder Zylinder mit Langbohrungen und/oder Mittenbohrungen ausgebildet sein. Sie können insbesondere mit einem Vakuum, einem Unterdruck oder Druckluftstößen beaufschlagt werden. Das Vakuum oder der Unterdruck können dazu verwendet werden, die Einleger (12) auf den Carriern (20) anzusaugen und so fest und stabil, aber lösbar an den Carriern (20) zu befestigen. Mit den Druckluftstößen können die Einleger (12) besonders einfach von den Carrieroberseiten entfernt beziehungsweise gelöst werden. Die Transporteinheit (18) kann daher Anschlüsse und/oder Zu- und Ableitungen für das Vakuum, den Unterdruck oder die Druckluft umfassen. Die Carrier (20) bewegen sich vorzugsweise entlang von Transportschienen, die vorzugsweise auch als Transportbänder ausgebildet sein können. Insbesondere umfasst die Transporteinheit (18) zwei im Wesentlichen parallele Transportabschnitte (42, 44) umfasst, wobei die Stanzeinheit (16) in einem ersten Transportabschnitt (42) angeordnet vorliegt, wobei die Transportabschnitte vorzugsweise auch als Transportbandabschnitte (42, 44) bezeichnet werden können. Es ist im Sinne der Erfindung bevorzugt, dass der erste Transportabschnitt (42) den Hinweg für die Carrier (20) auf dem Weg zur Tablettiermaschine (14) darstellt. Der Übergang zwischen dem zweiten Transportabschnitt (44) und dem ersten Transportabschnitt (42) wird von einem dritten Transportbandabschnitt (48) gebildet, mit dem die leeren Carrier (20) von dem zweiten hinteren Transportbandabschnitt (44) zur erneuten Beladung an den vorderen ersten Transportbandabschnitt (42) übergeben werden.

Den Übergang zwischen dem ersten Transportabschnitt (42) und dem zweiten Transportabschnitt (44) bildet die Übergabeeinheit (24), mit der die Einleger (12), die von den Übergabeköpfen (46) gehalten werden, in die Öffnungen (26) der Matrizenscheibe (28) der Tablettiermaschine (14) eingelegt werden können. Vorzugsweise sind die Matrizen (26) vor dem Einlegen der Einleger (12) mit einem Tablettiermaterial gefüllt worden, so dass die Einleger (12) bevorzugt auf das Tablettiermaterial abgelegt werden. Es ist im Sinne der Erfindung bevorzugt, dass das Tablettiermaterial Mangandioxid-Pulver umfasst, das beispielsweise mit einem Füllgerät in die Matrizen (26) der Matrizenscheibe (28) gefüllt werden kann. Wenn die Stützgitter auf das Tablettiermaterial aufgelegt wurde, kann beispielsweise mit der Vor- und/oder Hauptdruckstation (nicht dargestellt) der Tablettiermaschine (14) das Pressmaterial zusammen mit dem Stützgitter zu einem Pressling gepresst werden.

Die Übergabeeinheit (24) kann vorzugsweise Übergabemittel (40) umfassen, die beispielsweise als Übergabearme ausgebildet sein können. Die Übergabearme (40) können in einem ausgefahrenen oder in einem nicht-ausgefahrenen Zustand vorliegen, wobei sie im ausgefahrenen Zustand eine Arbeitslänge aufweisen. Ferner können die Übergabemittel (40) angehoben werden. Dazu kann die Übernahmevorrichtung (24) über Steuermittel verfügen, die beispielsweise als Steuerkurven ausgebildet sind. Im vorderen Bereich können die Übergabemittel (40) Köpfe (46) umfassen, die dazu eingerichtet sind können, die Einleger von den Carriern zu übernehmen. Die Übergabeköpfe (46) können Bohrungen aufweisen, die mit Vakuum, Unterdruck oder Druckluft beaufschlagt werden können. Dazu kann die Übergabeeinheit (24) vorzugsweise Anschlüsse und/oder Zu- und Ableitungen für das Vakuum, den Unterdruck oder die Druckluft umfassen. Die Übergabeeinheit (24) kann ferner einen Zahnkranz (38) umfassen, wobei der Zahnkranz (38) unterhalb der Übergabemittel (40) angeordnet vorliegt und dazu eingerichtet ist, die Carrier (20) von der Transporteinheit (18) zu übernehmen.

Figur 3 zeigt eine bevorzugte Ausführungsform einer Stanzeinheit (16) und einer Materialeinheit. Die Materialeinheit umfasst in einem der Stanzeinheit (16) vorgelagerten Bereich eine Zuführrolle (32) für frisches bandförmiges Material (22) für die Herstellung der Einleger (12), sowie eine Spannrolle, die das zuzuführende bandförmige Material (22) auf einer für die Stanzeinheit (16) Höhe hält. In einem der Stanzeinheit (16) nachgelagerten Bereich umfasst die Materialeinheit eine weitere Spannrolle zum Niederhalten des ausgestanzten Restbandes (36), sowie eine Rolle (34) zu dessen Aufnahme. Insbesondere zeigt Figur 3 eine Stanzeinheit (16) mit Bandzufuhr (32) und Bandabfuhr (34). Es ist im Sinne der Erfindung bevorzugt, dass die Stanzeinheit (16) zwischen den Elementen der Materialeinheit angeordnet vorliegt und dass die Stanzeinheit (16) und die Materialeinheit im Bereich des ersten Transportbandabschnitts (42) der Transporteinheit (18) vorliegen.

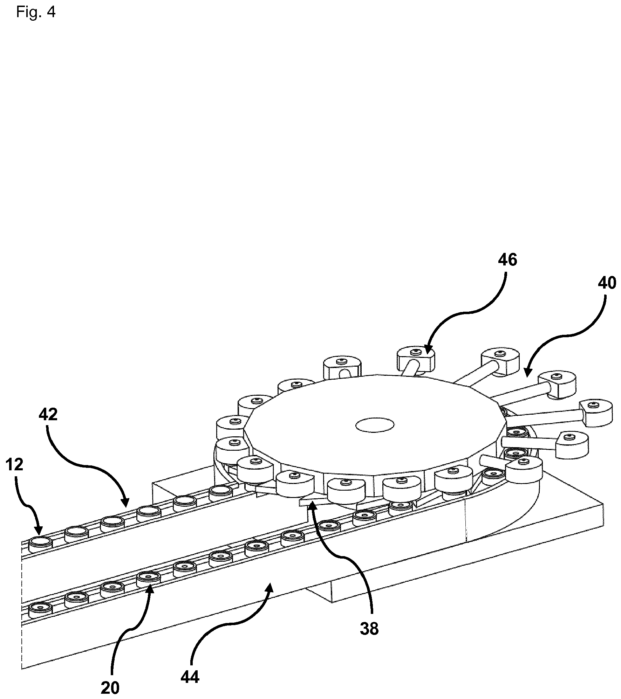

Figur 4 zeigt eine bevorzugte Ausführungsform einer Übergabeeinheit (24). Insbesondere zeigt Figur 4 den Transport der mit den ausgestanzten Einlegern (12) gefüllten Carrier (20) zu der Übergabeeinheit (24), die bewegliche Übergabearme (40) umfassen kann. Die mit den ausgestanzten Einlegern (12) beladenen Carrier (20) werden am Ende des ersten Transportbandabschnitts (42) der Transporteinheit (18) vom Zahnkranz (38) der Übergabeeinheit (24) übernommen und in Aussparungen des Zahnkranzes (38) im Kreis geführt. Insbesondere liegt der Zahnkranz (38) zur Führung der Carrier (20) unterhalb den Übergabearmen (40) vor. Die Übergabearme (40) liegen zunächst im nicht-ausgefahrenen Zustand vor und übernehmen in diesem die Einleger (12) von den Oberseiten der Carrier (12), die beispielweise Führungen zur besseren Halterung der Einleger (12) aufweisen können. Nach erfolgter Übernahme der Einleger (12) durch die Übergabemittel (40) beziehungsweise die Köpfe (46) der Übergabeköpfe (40) fahren die Übergabearme (40) und gelangen in einen Arbeitszustand. Die Übergabeköpfe (46) können beispielsweise mit Vakuum oder Unterdruck beaufschlagt sein, um die Einleger (12) besser halten zu können. Im ausgefahrenen Zustand überstreichen die Übergabearme (40) beziehungsweise ihre Köpfe (46) für eine gewisse Zeitspanne einen Teilbereich der Matrizenscheibe (28), so dass ein genügend großer Zeitraum für eine sichere und präzise Übergabe der Einleger (12) in die Öffnungen (26) der Matrizenscheibe (28) verbleibt. Die Übergabearme (40) gehen nach erfolgter Abgabe der Einleger in den eingefahrenen Zustand zurück, bis am Ende des ersten Transportbandabschnittes (42) wieder ein neuer Einleger (12) aufgenommen wird. Die leeren Carrier (20) werden zunächst mit dem Zahnkranz (38) weiterbefördert, vorzugsweise bis zum Beginn des zweiten Transportbandabschnitts (44). Dort werden die Carrier (20) an das zweite Transportband (44) übergeben und von der Transporteinheit (18) entlang des zweiten Transportbandabschnitts (44) transportiert.

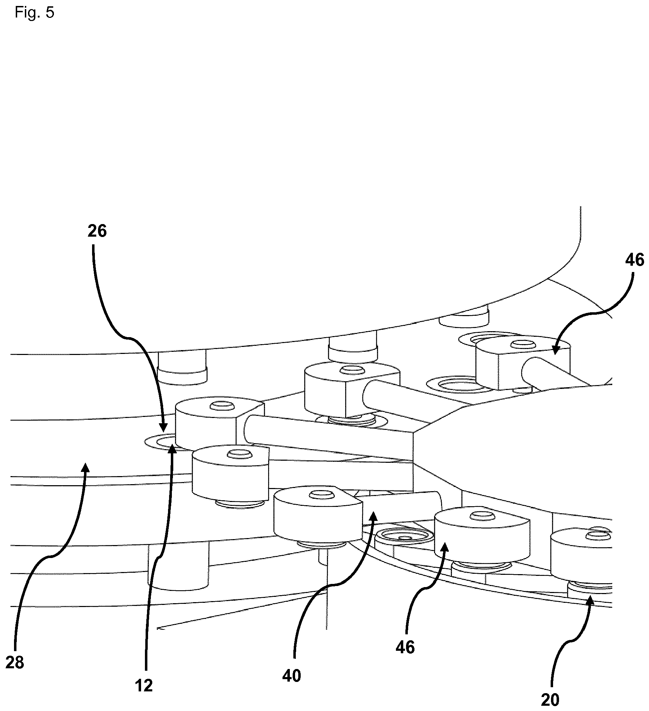

Figur 5 zeigt einen beispielhaften Übergabeprozeß der Einleger (12) von der Transporteinheit (18) an die Tablettiermaschine (14) durch die Übergabeeinheit (24). Insbesondere zeigt Figur 5 die Bewegung der Übergabearme (40) mit der Übernahme der Einleger (12) mittels Vakuum, die Zuführung der mit den Einlegern (12) gefüllten Carriern (20) zu der Matrizenscheibe (28) der Tablettiermaschine (14), wobei die Matrizenscheibe (28) die mit dem Pressmaterial gefüllte Matrizen (26) umfasst, wobei auf dem Tablettiermaterial die Einleger (12) eingelegt sind. Deutlich zu sehen ist in Figur 5 der Ausfahrprozess der Übergabearme (40) von einem eingezogenen oder nicht-ausgefahrenen Zustand in einen ausgefahrenen Zustand, in dem die Einleger (12) an die Öffnungen (26) der Matrizenscheibe (28) übergeben werden.

### Bezugszeichenliste:

- 10: Vorrichtung
- 12: Einleger, insbesondere Stützgitter
- 14: Tablettiermaschine, zum Beispiel Rundlaufpresse
- 16: Stanzeinheit
- 18: Transporteinheit
- 20: Carrier
- 22: bandförmiges Material
- 24: Übergabeeinheit
- 26: Öffnungen
- 28: Matrizenscheibe
- 30: Hubeinrichtung für die Carrier
- 32: Mittel zum Zuliefern des bandförmigen Materials
- 34: Mittel zur Aufnahme eines ausgestanzten bandförmigen Materials
- 36: ausgestanztes bandförmiges Material
- 38: Zahnkranz
- 40: Übergabemittel
- 42: erster Transportbandabschnitt
- 44: zweiter Transportbandabschnitt
- 46: Übergabeköpfe
- 48: dritter Transportbandabschnitt / Quertransportvorrichtung

## Patentansprüche

1. Vorrichtung (10)zur Bereitstellung von Gegenständen zur Verwendung als Einleger (12) in einem Pressling an eine Tablettiermaschine (14),
**dadurch gekennzeichnet, dass**
die Vorrichtung (10) eine Stanzeinheit (16) und eine Transporteinheit (18) mit Carriern (20) umfasst, wobei die Stanzeinheit (16) dazu eingerichtet ist, die Einleger (12) aus einem bandförmigen Material (22) auszustanzen und auf die Carrier (20) der Transporteinheit (18) zu übergeben, wobei die ausgestanzten Einleger (12) auf den Carriern (20) zu einer Übergabeeinheit (24) transportiert werden, wobei die Übergabeeinheit (24) dazu eingerichtet ist, die ausgestanzten Einleger (12) von den Carriern (20) zu übernehmen und in Öffnungen (26) einer Matrizenscheibe (28) der Tablettiermaschine (14) einzulegen, so dass die ausgestanzten Einleger (12) durch die Tablettiermaschine (14) mit einem Tablettiermaterial zu einem Pressling verarbeitbar sind.

2. Vorrichtung (10) nach Anspruch 1
**dadurch gekennzeichnet, dass**
die Stanzeinheit (16) eine Anzahl von N Stanzmitteln (16) umfasst, wobei die Stanzmittel (16) dazu eingerichtet sind, die Einleger (12) aus dem bandförmigen Material (22) auszustanzen.

3. Vorrichtung (10) nach Anspruch 1 oder 2
**dadurch gekennzeichnet, dass**
die Carrier (20) im Bereich der Stanzeinheit (16) mit einer Hubeinrichtung (30) anhebbar sind.

4. Vorrichtung (10) nach einem oder mehreren der vorhergehenden Ansprüche
**dadurch gekennzeichnet, dass**
die Vorrichtung (10) Mittel (32) zum Zuliefern des bandförmigen Materials (22) und Mittel (34) zur Aufnahme eines ausgestanzten bandförmigen Materials (36) umfasst.

5. Vorrichtung (10) nach einem oder mehreren der vorhergehenden Ansprüche
**dadurch gekennzeichnet, dass**
die Übergabeeinheit (24) Übergabemittel (40) zur Übernahme der ausgestanzten Einleger (12) von den Carriern (20) und zur Übergabe der ausgestanzten Einleger (12) in die Öffnungen (26) einer Matrizenscheibe (28) aufweist.

6. Vorrichtung nach Anspruch 5
**dadurch gekennzeichnet, dass**
eine Bewegung der Übergabemittel (40) synchron zu einer Bewegung der Matrizenscheibe (28) der Tablettiermaschine (14) erfolgt.

7. Vorrichtung (10) nach einem oder mehreren der vorhergehenden Ansprüche
**dadurch gekennzeichnet, dass**
die Übergabeeinheit (24) einen Zahnkranz (38) umfasst, wobei der Zahnkranz (38) unterhalb der Übergabemittel (40) angeordnet vorliegt und dazu eingerichtet ist, die Carrier (20) von der Transporteinheit (18) zu übernehmen.

8. Vorrichtung nach einem oder mehreren der vorhergehenden Ansprüche
**dadurch gekennzeichnet, dass**
die Übergabeeinheit (24) so ausgebildet ist, dass die Übergabemittel (40) in einem ausgefahrenen Zustand einen Teilkreis der Matrizenscheiben (28) der Tablettiermaschine (14) überstreichen.

9. Vorrichtung (10) nach einem oder mehreren der vorhergehenden Ansprüche
**dadurch gekennzeichnet, dass**
die Transporteinheit (18) zwei im Wesentlichen parallele Transportabschnitte (42, 44) umfasst, wobei die Stanzeinheit (16) in einem ersten Transportabschnitt (42) angeordnet vorliegt.

10. Verfahren zur Herstellung eines Presslings, der einen Einleger (12) aufweist, **umfassend die folgenden Schritte:**
a) Bereitstellen eines bandförmigen Material (22) an eine Stanzeinheit (16),
b) Ausstanzen von Einlegern (12) aus dem bandförmigen Material (22) in der Stanzeinheit (16),
c) Transport der ausgestanzten Einleger (12) zu einer Übergabeeinheit (24),
d) Übergabe der ausgestanzten Einleger (12) durch die Übergabeeinheit (24) in Öffnungen (26) einer Matrizenscheibe (28) einer Tablettiermaschine (14),
e) Herstellung eines Presslings, der einen Einleger (12) aufweist.

11. Verfahren nach Anspruch 10
**dadurch gekennzeichnet, dass**
das Austanzen der Einleger (12) getaktet erfolgt, während die Zuführung der ausgestanzten Einleger (12) an die Tablettiermaschine (14) kontinuierlich erfolgt.

12. Verfahren nach Anspruch 10 oder 11
**dadurch gekennzeichnet, dass**
der Transport der ausgestanzten Einleger (12) zu der Übergabeeinheit (24) folgende weitere Schritte umfasst:
c1) Bereitstellen von Carriern (20) durch eine Transporteinheit (18),
c2) Aufnahme der ausgestanzten Einleger (12) durch die Carrier (20) in der Stanzeinheit (16).

13. Vorrichtung (10) nach einem oder mehreren der Ansprüche 1 bis 9 oder Verfahren nach einem oder mehreren der Ansprüche 10 bis 12
**dadurch gekennzeichnet, dass**
die Einleger (12) Stützgitter sind, die zur Erhöhung einer mechanischen Stabilität in einen Pressling einbringbar sind.

14. Vorrichtung (10) nach einem oder mehreren der Ansprüche 1 bis 9 oder Verfahren nach einem oder mehreren der Ansprüche 10 bis 13
**dadurch gekennzeichnet, dass**
die Presslinge ein Metalloxid-Pulver umfassen.

15. Vorrichtung (10) oder Verfahren nach Anspruch 14
**dadurch gekennzeichnet, dass**
das Metalloxid-Pulver Mangandioxid umfasst.
